Europäisches Patentamt

European Patent Office

Office européen des brevets

(11) Publication number: **0 264 465**
**B1**

# (12) EUROPEAN PATENT SPECIFICATION

(45) Date of publication of the patent specification:
14.03.90

(51) Int. Cl.⁴: **C03C 27/02, C23D 5/04**

(21) Application number: **86114406.1**

(22) Date of filing: **17.10.86**

(54) Method and apparatus for the manufacture of a clad tube.

(43) Date of publication of application:
**27.04.88 Bulletin 88/17**

(45) Publication of the grant of the patent:
**14.03.90 Bulletin 90/11**

(84) Designated Contracting States:
**CH DE FR LI**

(56) References cited:
DE-A- 2 310 328
FR-A- 2 080 122

CHEMICAL ABSTRACTS, vol. 93, no. 16, October 1980,
page 285, abstract no. 154751c, Columbus, Ohio, US; &
JP-A-80 32 726 (NIPPON ELECTRIC GLASS CO.
LTD) 07-03-1980

(73) Proprietor: FUJI ELECTRIC CO. LTD., 1-1,
Tanabeshinden, Kawasaki-ku, Kawasaki 210(JP)

(72) Inventor: Kitaide, Hiromu, Fuji Electric Co.,
Ltd. 1-1 Tanabeshinden, Kawasaki-ku Kawasaki 210(JP)
Inventor: Kawasaki, Michio, Fuji Electric Co.,
Ltd. 1-1 Tanabeshinden, Kawasaki-ku Kawasaki 210(JP)

(74) Representative: Meyers, Ernest et al, Office de Brevets
FREYLINGER & ASSOCIES B.P. 1 321, route d'Arlon,
L-8001 Strassen(LU)

# Description

This invention relates to a method for the manufacture of a clad tube having glass, for example, tightly superposed in a layer on the inner side of a metallic tube such as a steel pipe, an apparatus for the manufacture of the clad tube, and a method for the operation of the apparatus mentioned above.

A method of producing a clad tube with a glass tube and a steel tube, which comprises heating the steel tube and the tube inserted through the steel tube in a heating oven filled with an atmosphere formed by combustion of gas or heavy oil thereby softening the glass tube and then applying heat on the interior of the glass tube thereby causing the glass tube to be inflated and fused with the inner side of the steel tube is well known.

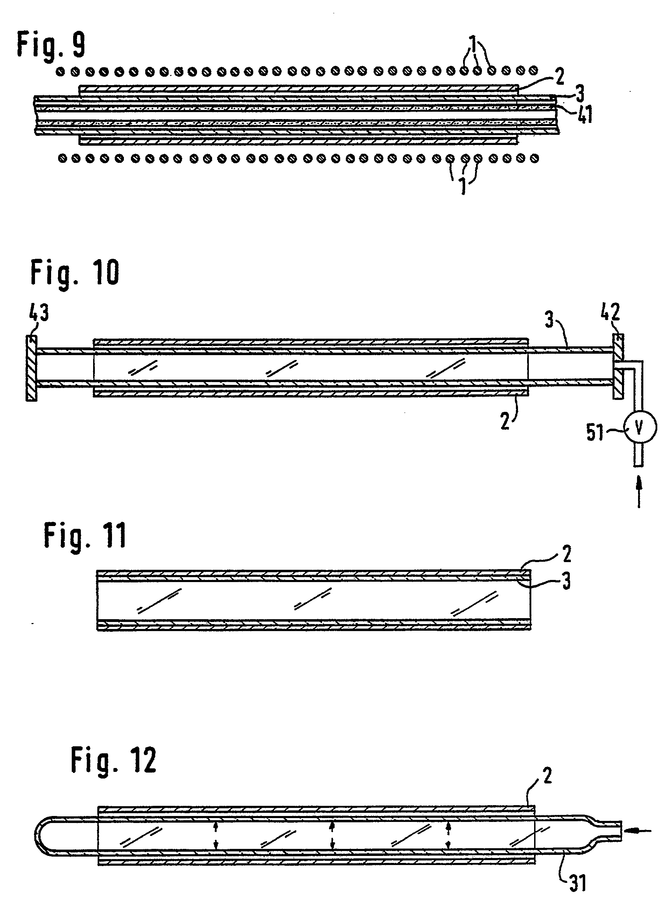

Figure 12 illustrates in detail a typical conventional method for the manufacture of a clad tube with a glass tube and a steel tube. In the diagram, 31 denotes a glass tube having one end thereof closed and the other end thermally formed in the shape of a nozzle to facilitate application of pressure of air therethrough and 2 denotes a tube of steel such as stainless steel disposed around the outer side of the aforementioned glass tube 31. The steel tube 2 and the glass tube 31 are heated in the oven filled with the aforementioned atmosphere, then the softened glass tube 31 is pressed outwardly from the inner side thereof with the pressure applied through the nozzle of the glass tube thereby to fuse the glass tube 31 with the inner side of the steel tube 2, to complete a clad tube. The glass tube 31 has been formed by first molding molten glass in the shape of a pipe with a special die, cutting the pipe to a prescribed length, then reheating the opposite ends of the cut pipe, and forming the opposite ends severally in prescribed shapes.

According to one embodiment of FR-A 2 080 122, a glass tube having two openings at its opposite ends is used, said openings being tightly closed by sealing means.

By the method described above, and known from FR-A 2 080 122, however, the elevation of temperature of the glass tube consumes so much time as to lower productivity, the control of temperature is difficult, the operating procedure of the oven is not easy, and the production necessitates provision of a large apparatus. Further, the finished clad tube entails the problem of quality in that bubbles remain on the fused surface thereof. The process of manufacture of the glass tube which has one end closed is so complicated as to boost the price of the glass tube itself. From Chemical Abstracts, vol. 93, 1980, page 285, Abstract No 154 751, a method is known for bounding a metal anode button to a glass wall of a TV picture tube by using the radiant heat of a heating coil to melt the glass locally whereby the periphery of the anode button is sealed by the molten glass.

This invention has been made to overcome the drawbacks of the prior art mentioned above. It aims to provide a method for the manufacture of a clad tube which requires only a short heating time and consequently enjoys enhanced productivity, permits easy temperature control, and enables the finished product to exhibit satisfactory performance owing to thorough elimination of bubbles, an apparatus for the manufacture of the clad tube, and a method for the operation of the apparatus.

According to one aspect of the invention, there is provided a method for the manufacture of a clad tube consisting of a thermoplastic tube and a metallic tube, characterized by coaxially inserting into a cylindrical induction coil a metallic tube and a thermoplastic tube of greater length than the metallic tube, inserted through said metallic tube, said thermoplastic tube having two openings at its opposite ends which are tightly closed, allowing said metallic tube to be heated by said induction coil serving as a heater, and heating said thermoplastic tube with the radiant heat from said heater and, at the same time, applying pressure on the interior of said thermoplastic tube, thereby causing said thermoplastic tube to be inflated and fused with the inner surface of said metallic tube.

According to a further aspect of the invention, there is provided a method for the manufacture of a clad tube consisting of a thermoplastic tube and a metallic tube consisting of a thermoplastic tube and a metallic tube, comprising tightly closing a thermoplastic tube inserted through a metallic tube and having openings at the opposite ends thereof and being of greater length than the metallic tube, characterised by indirectly heating said thermoplastic tube by said metallic tube which is induction heated and, either after of during the course of said heating, applying pressure to the interior of said thermoplastic tube, thereby causing said thermoplastic tube to be inflated and fused with the inner surface of said metallic tube.

There is also provided an apparatus for carrying out the method of the present invention comprising means for tightly closing openings at the opposite ends of a thermoplastic tube inserted through a metallic tube, pressure means for applying pressure to the interior of said thermoplastic tube, and induction heating means for indirectly heating said metallic tube.

The above discussed and other advantages of the present invention will be apparent to and understood by those skilled in the art from the following detailed description and drawings wherein:

Figure 1 is a cross section of a typical heating device used in embodying the various aspects of this invention.

Figure 2 is a cross section of an apparatus for the manufacture of a clad tube, incorporating therein the heating device of Figure 1.

Figure 3 and Figure 4 are respectively a lefthand side view and a righthand side view of the apparatus of Figure 2.

Figure 5 is a cross section of a typical heating device as a working example of the second aspect of this invention.

Figure 6 is a cross section of another typical heating device as another working example of the second aspect of the invention.

Figure 7 illustrates graphs of temperature distributions produced by the heating devices of Figure 5 and Figure 6 and sectioned diagrams showing the process of fusion of the glass tube with the steel tube.

Figure 8 illustrates graphs of temperature distributions produced by heating devices under certain conditions and diagrams showing the process of fusion of the glass tube to the steel tube.

Figure  is a cross section of a typical heating device as one working example of the third aspect of this invention.

Figure 10 is a cross section illustrating a typical method for the manufacture of a clad tube as one working example of the third aspect of the invention.

Figure 11 is a cross section of a clad tube produced by the method illustrated in Figure 10.

Figure 12 is a cross section illustrating a typical conventional method for the manufacture of a clad tube.

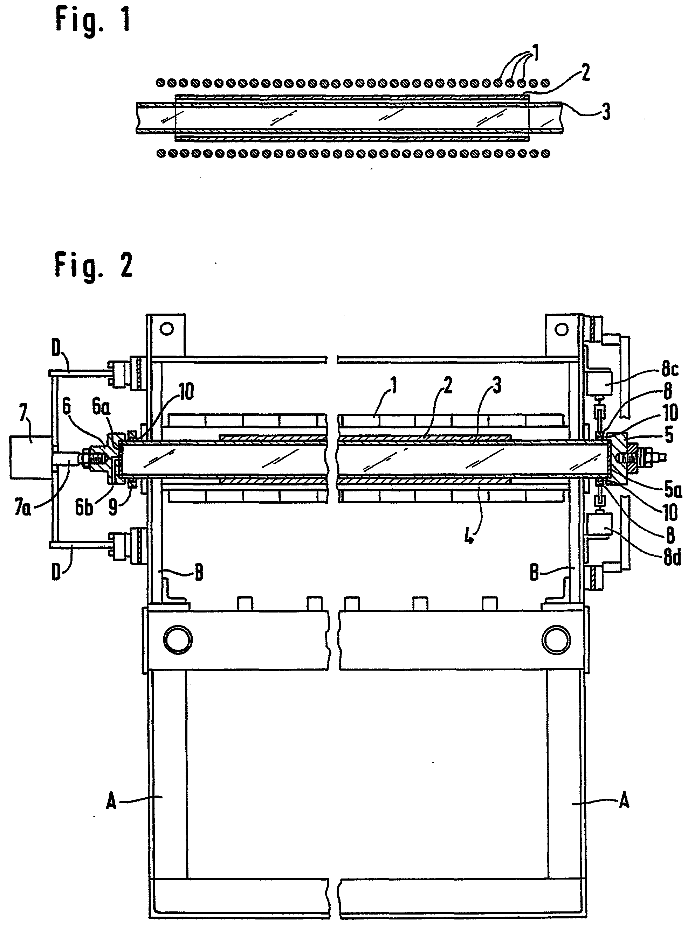

Figure 1 depicts one working example of the present invention. As illustrated in the diagram, a tube 2 of steel such as stainless steel is inserted through the interior of an induction coil 1 and, at the same time, a glass tube 3 is inserted through the interior of the steel tube 2 and these three components 1, 2 and 3 are coaxially supported in position. When an electric current of high frequency in the order of 1,800 Hz is passed through the induction coil 1, an induced electric current flows through the steel tube 2 disposed inside the induction coil. Owing to the consequent loss of electric current, the steel tube 2 generates heat. The glass tube 3 inserted through the steel tube 2 now serving as a heater is heated with the radiant heat from the steel tube 2 as the heater.

Figure 2 illustrates a typical apparatus for the manufacture of a clad tube by the use of the aforementioned induction coil. The parts which have equivalents in Figure 1 are denoted by the same reference numerals.

A denotes an apparatus and 1 denotes a cylindrical heating induction coil disposed in the heating part of the apparatus and supported in a horizontal direction with a suitable member on a frame B erected on the apparatus A. On the lower side of the interior of this induction coil, a skid rail 4 adapted to facilitate the insertion and extraction of the steel tube 2, a member to be heated, and of the glass tube 3 inserted through this steel tube 2, is disposed in a horizontal direction. The outside diameter of this glass tube 3 is slightly smaller than the inside diameter of the steel tube 2 so that the glass tube 3 may be inserted into the afore-mentioned steel tube 2. This glass tube 3 has a length greater than the length of the steel tube 2. This length of the glass tube 3 is such that when the glass tube is inserted in the induction coil 1, the glass tube 3 will protrude to a prescribed length from each of the opposite ends of a heater of the apparatus. Reference numerals 5 and 6 denote a stationary cap and a movable cap for tightly closing the opposite ends of the glass tube 3 and supporting the glass tube 3 in position. The stationary cap 5 is attached to a movable brack-

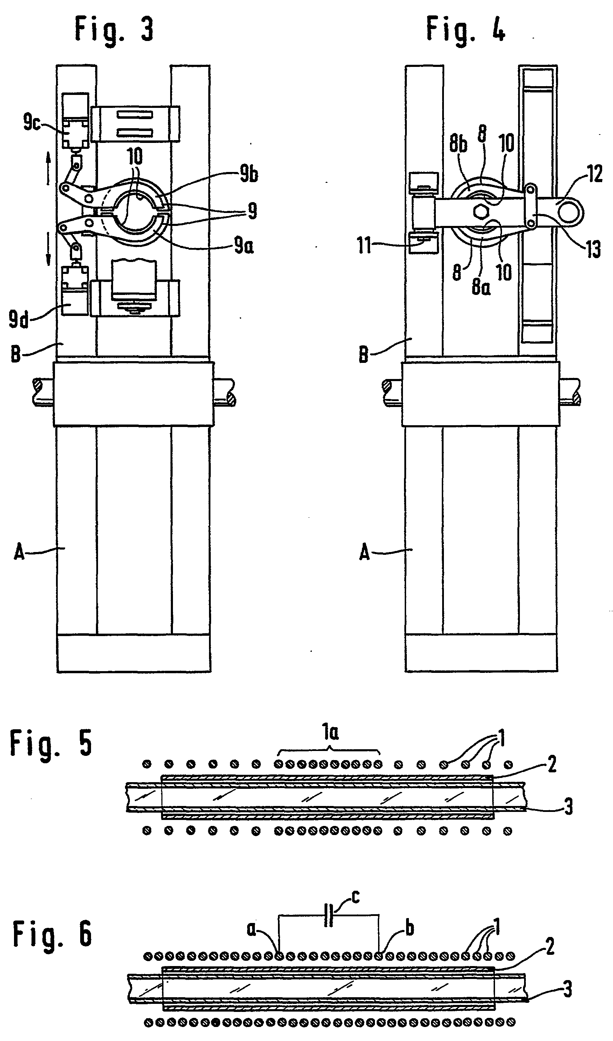

et 12 (see figure 4) rotating about a shaft 11 on the frame B on the righthand side relative to the diagram of the apparatus A at a position substantially coinciding with the axis of the induction coil 1. The movable cap 6 is disposed on the left side of the diagram, of the apparatus at a position opposite the stationary cap 5, connected to the leading end of a piston 7a of a pneumatic cylinder 7 secured on a frame D, and enabled to be moved in a horizontal direction in consequence of the movement of the piston 7a of the cylinder 7. The end parts of this glass tube 3 are fixed in position by the stationary cap 5 and the movable cap 6 by means of respective packings 5a and 6a. A nozzle 6b for applying pressure to the interior of the glass tube 3 is provided on the movable cap by means of a packing 6a.

Denoted by 8 and 9 are clamps disposed respectively near the packings 5a and 6a and each formed of an upper arm 8b (9b) and a lower arm 8a (9a). The arms 8a and 8b are opened or closed by cylinders 8c and 8d fixed on the frame. When the arm 8a (8b) is closed, a force is uniformly exerted radially towards the center of the glass tube 3 by means of a stationary member 10 so as to prevent the glass tube from being displaced in the horizontal direction. The clamps 8 and 9, as illustrated in the side views of Figure 3 and Figure 4, each have a linkage mechanism so that they may be loosened during the attachment of the glass tube 3 to the apparatus. The clamp 9 on the lefthand side is provided with a similar cylinder, though not shown in the diagrams.

Now, the operation of the apparatus described above will be explained below.

First, the bracket 12 is turned about shaft 11 out of the surface of the drawing of Figure 4 and the steel tube 2 is mounted on the skid rail 4 at the central position inside the induction coil 1 so that the steel tube 4 may be uniformly heated throughout the entire volume thereof, with heat sufficiently distributed even to the opposite end parts thereof.

Then, the glass tube 3 is inserted through the interior of the steel tube 2. In this case, the movable cap 6 side of the glass tube 3 is allowed to protrude to a slightly greater distance than the opposite side thereof. Subsequently, the axis of the glass tube 3 and the axis of the induction coil 1 are made to coincide substantially with each other by the clamps 8 and 9. In this case, the clamps 8 and 9 are tightened around the glass tube 3 to such an extent that the glass tube 3 may be readily moved by the force exerted in the axial direction from the movable cap 6 side. Then, the bracket 12 is turned about shaft 11 so that the righthand end of the glass tube 3 fits into the inner surface side of the stationary cap 5 and acts as a stopper and seal. Subsequently, the rotation of the bracket 12 is stopped by fastening the stopper 13 onto the frame. In the meantime, the movable cap 6 is moved by the cylinder 7 to bring the lefthand end of the glass tube 3 into engagement with the movable cap 6 and, by exertion of the force in the axial direction, the packings 5a and 6a are caused to seal the opposite end parts of the glass tube 3. Subsequently the clamps 8 and 9 fitted around the glass tube 3 are fully tightened so that when the glass tube 3 is softened by the subsequent heating, the glass tube 3 will not be displaced by the force exerted by the cylinder 7 in the axial direction and the seals at the opposite end parts of the glass tube 3 will be retained effectively. The lower arms 8a and 9a of the clamps 8 and 9 are adjusted so that the glass tube 3 will be centered while the lower arms 8a and 9a are moving until their stroke ends and the upper arms 8b and 9b are tightened slightly more weakly than the lower arms 8a and 9a so as to prevent the clamps 8 and 9 from being displaced out of their fixed positions. After completion of the preparation described above, an AC electric power for heating is applied to the induction coil 1 to start induction heating of the steel tube 2. Consequently, the glass tube 3 is heated to a prescribed temperature (in the range of 600° to 800°C) with the radiant heat from the heated steel tube 2. When the glass tube 3 is softened, an inert gas is introduced through the nozzle 6b into the glass tube 3 to exert pressure on the inner surface of the glass tube 3, with the result that the glass tube 3 will be inflated and fused with the inner side of the steel tube 2. Then, with proper timing, the clamps 8 and 9 and the stationary caps 5 and 6 are actuated by the manipulation of the respective cylinders 8c and 8d to loosen the clamped and sealed parts. At the same time, the bracket 12 is opened and the clad tube is taken out. The application of pressure to the interior of the glass tube 3 may be effected before the glass tube 3 is heated to the aforementioned prescribed temperature. Optionally, the glass tube may be substituted with a pipe made of a thermally deformable resin.

In the embodiment described above, sealing packings are disposed at the opposite open end surfaces of the glass tube so as to prevent leakage from the glass tube of a small wall thickness of 3 mm. By means of these packings, an accurately controlled force is exerted in the axial direction upon the glass tube 3. In order that the glass tube may endure the aforementioned force thus exerted thereon in the axial direction when it is softened by the heating, the clamps which uniformly tighten the glass tube toward the axis thereof near the aforementioned packings possess flexibility enough to absorb the force and, at the same time, the clamps are maintained in position by stationary members with a friction coefficient sufficiently great to withstand the axially exerted force.

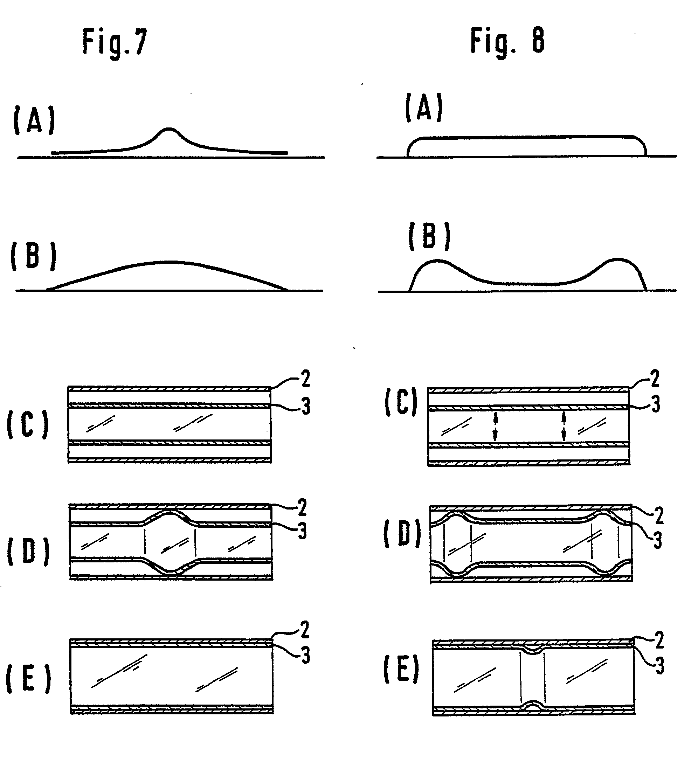

The following description pertains specifically to the second aspect of this invention. In accordance with the method described above, the opposite end parts of the glass tube are not directly heated. When the glass tube to be used is comparatively short, the temperature distribution in the glass tube is such that the temperature of the central part thereof is higher than the opposite end parts. When the glass tube has a great length, the temperature distribution is such that the temperature is uniform throughout the entire length as illustrated in Figure 8 (A) or, less desirably, the temperature is higher at the opposite end parts than in the central part as illustrated in Figure 8 (B). When the glass tube 3 of Figure 8 (C) having such a temperature distribution as mentioned above is exposed to the pressure, the glass tube 3 begins to undergo fusion with the steel tube 2 at portions other than the central part as illustrated in Figure 8 (D) and (E), with the result that the gas is entrapped in the central part between the glass tube 3 and the steel tube 2 and the central part of the glass tube 3 possibly is not fused with the steel tube.

In Figure 5 which depicts a second working example of this invention, the induction coil 1 is wound densely in the central part 1a thereof and sparsely in the opposite end parts. The temperature distribution caused on the steel tube 2 by this induction coil 1 is such that the temperature is higher in the central part of the coil, i.e the central part in the axial direction of the steel tube 2, than in the opposite end parts as illustrated in Figure 7 (A) or (B). The temperature difference is desired to fall in the range of 30° to 100°C. When the glass tube of Figure 7 (C) having such a temperature distribution as described above is subjected to application of pressure with the inert gas, the glass tube 3 is inflated and fused with the steel tube 2 first in the central part thereof which has a higher temperature. Thereafter, the sites of fusion gradually shift from the central part to the opposite end parts. Unlike the conventional countertype, the glass tube 3 has no possibility of entrapping the gas between itself and the steel tube 2. Thus, the glass tube 3 produces uniform fusion with the steel tube 2 as illustrated in Figure 7 (E).

Figure 6 depicts another working example of the second aspect of this invention. As shown in the diagram, the induction coil 1 is wound at a fixed pitch. For enabling this induction coil 1 to give the steel tube 2 a temperature distribution such that the central part thereof will have a higher temperature, a condenser C is connected to the central part of the induction coil 1, specifically to coil pieces a and b disposed at the opposite ends of the portion of the induction coil corresponding to the densely wound portion of the induction coil of Figure 5. When the capacity C of this condenser C is so fixed that it will generate parallel resonance with the reactance between the coil pieces a and b, the magnitude of electric current flowing between the coil pieces a and b is enabled to surpass that of the electric current flowing in the remaining portions of the coil, with the result that the steel tube 2 is given a temperature distribution allowing the central part of the steel tube 2 to have a higher temperature than the opposite end parts thereof.

The following description pertains particularly to the third aspect of the present invention.

Figure 9 depicts another working example of this invention. As illustrated in the diagram, a tube 2 of steel such as stainless steel is coaxially inserted in the interior of an induction coil 1. A glass tube 3 to be worked is similarly inserted inside the steel tube 2, and a magnetic tube 41 intended for accelerating heating is similarly inserted inside the glass tube 3. When an electric current of high frequency in the order of 1,800 Hz is passed through the induction coil 1, an induced electric current flows through the steel tube 2 disposed inside this induction coil 1. The magnetic tube 41 is adapted for accelerating the heating inside the glass tube 3 inserted through the steel tube 2. As the result, the glass tube is heated with the heat generated by the steel tube 2 owing to the consequent loss of electric current and the radiant heat from the magnetic tube 41.

Thus, the glass tube 3 is heated simultaneously on the outside and the inside and, therefore, the temperature of the glass tube 3 is elevated to a prescribed level (in the range of 600° to 800°C) in a short period of time.

Where the heating at such a high temperature as described above deforms the steel tube 2 possibly to an extent of jeopardizing the dimensional stability, and causes unwanted transformation of the steel tube possibly to an extent of impairing the corrosion proofness of stainless steel, the steel pipe 2 is prevented from being heated to the aforementioned high temperature and the magnetic tube 41 is selectively heated to the high temperature by demagnetizing the steel tube 2 and giving the magnetic tube 41 a thickness in the range of 1 to 3 mm.

The temperature difference between the steel tube 2 and the magnetic tube 41 falls in the range of 100° to 150°C. A proper setting of this temperature difference can be easily adjusted by the frequency of the power to be fed to the induction coil 1.

The following description pertains particularly to the fourth aspect of this invention.

Figure 10 depicts yet another working example of this invention. As illustrated in this diagram, a glass tube 3 is cut to a prescribed size. The outside diameter of this glass tube 3 is slightly smaller than the inside diameter of a steel tube 2 so that the glass tube 3 may be safely inserted inside the steel tube 2. The glass tube 3 has a greater length than the steel tube 2 so that the glass tube inserted through the steel tube 2 may protrude to a prescribed length from either end part of the steel tube 2. The glass tube 3 is provided at the opposite ends thereof with lids 42 and 43 capable of resiting heat and hermetically sealing the air inside the glass tube 3. The lid 42 is provided with a pressure device 51 adapted to deliver pressure through the lid 42 and exert it on the interior of the glass tube 3.

In accordance with a practical method for the manufacture of a clad tube, first the valve of the pressure device 51 is closed and the glass tube 3 is hermetically sealed in a state containing the air. Then, a heating device (not shown) disposed outside the steel tube 2 is turned on to heat the glass tube 3 through the steel tube 2 until the glass tube 3 is softened. Then, the valve of the aforementioned heating device 51 is opened to start exertion of pressure to the interior of the glass tube 3 and thereby to cause the glass tube 3 to be inflated radially and eventually fused with the inner side of the steel tube 2.

The exertion of the pressure to the interior of the glass tube 3 may be carried out while the heating of the glass tube 3 is in process as described above. Optionally, the glass tube 3 may be substituted with a pipe of thermally deformable resin, for example.

Figure 11 depicts a clad tube obtained by cutting off the portions of the glass tube 3 protruding from the opposite ends of the steel tube 2 after the afore-mentioned fusion is completed. This clad tube may be used as an ozon generating tube for an ozon generator, for example.

As described above, the present invention, invariably in all the aspects thereof, contemplates producing a clad tube by inserting inside a metallic tube a glass tube of greater length, indirectly heating the glass tube with the radiant heat from the metallic tube, and applying pressure to the interior of the heated and softened glass tube. Thus, the opposite end parts of the glass tube have a relatively low temperature and the portion of the glass tube radially opposed to the metallic tube can be heated to a uniform temperature. As the result, the produced glass tube enjoys a good quality.

Particularly in the case of the first aspect of this invention, the temperature of the glass tube can be elevated to the stated level in a short period of time owing to the adoption of an induction heating device using an induction coil adapted to effect induction heating of the metallic tube. As the result, the apparatus used enjoys improved productivity, and ease of temperature control and compactness of structure.

Particularly in the case of the second aspect of the invention, since the induction coil is so adapted as to acquire a higher temperature in the central part thereof, the pressure exerted to the interior of the heated and softened glass tube enables the glass tube to be inflated and fused with the steel tube first in the central part thereof and, as a result, the fusion so effected has no possibility of entrapping the gas in any part between the glass tube and the steel tube. Because of the uniform fusion produced between the glass tube and the steel tube, the clad tube consequently finished is allowed to acquire a good quality.

Particularly in the case of the third aspect of the invention, since the glass tube is heated with the radiant heat from the metallic tube disposed outside the glass tube and adapted to be heated by the induction coil and additionally with the radiant heat from the magnetic tube disposed inside the glass tube, the temperature of the glass tube can reach the selected level very quickly. This aspect of the invention also has an effect of precluding the possible deterioration of the material of the metallic tube due to overheating by suitably selecting the materials of the component tubes thereby enabling the magnetic tube disposed inside the glass tube to be selectively heated.

Particularly in the case of the fourth, fifth and sixth aspects of the invention, the manufacture of a clad tube is effected by providing the glass tube at the opposite open end parts thereof with means of tight closure, softening the glass tube by heating, and then exerting pressure to the interior of the glass tube thereby enabling the glass tube to be inflated radially and eventually fused with the inner side of the metallic tube. This method, therefore, has no use for the here-tofore inevitable work of cutting off the opposite end parts of the glass tube. Since it can use a plain glass tube having open ends, there is derived an effect of producing the clad tube at a low cost.

## Claims

1. A method for the manufacture of a clad tube consisting of a thermoplastic tube and a metallic tube, characterized by coaxially inserting into a cylindrical induction coil a metallic tube and a thermoplastic tube of greater length than the metallic tube, inserted through said metallic tube, said thermoplastic tube having two openings at its opposite ends which are tightly closed, allowing said metallic tube to be heated by said induction coil serving as a heater, and heating said thermoplastic tube with the radiant heat from said heater and, at the same time, applying pressure on the interior of said thermoplastic tube, thereby causing said thermoplastic tube to be inflated and fused with the inner surface of said metallic tube.

2. A method according to claim 1, characterized in that said heating is carried out in such a manner that the central part of said induction coil assumes in the axial direction thereof a temperature higher than the opposite end parts thereof.

3. A method according to claims 1 or 2, characterized in that a magnetic tube is inserted inside said thermoplastic tube and serves as a heater and wherein said thermoplastic tube is heated with the radiant heat from said metallic tube and said magnetic tube both heated by said induction coil and, at the same time, pressure is applied on the interior of said thermoplastic tube.

4. A method for the manufacture of a clad tube consisting of a thermoplastic tube and a metallic tube, comprising tightly closing a thermoplastic tube inserted through a metallic tube and having openings at the opposite ends thereof and being of greater length than the metallic tube, characterized by indirectly heating said thermoplastic tube by said metallic tube which is induction heated and, either after of during the course of said heating, applying pressure to the interior of said thermoplastic tube.

5. An apparatus for carrying out the method of anyone of claims 1 to 4, comprising means (5a, 6a) for tightly closing openings at the opposite ends of a thermoplastic tube (3) inserted through a metallic tube (2), pressure means (6b) for applying pressure to the interior of said thermoplastic tube (3), and induction heating means (1) for indirectly heating said metallic tube (2).

## Patentansprüche

1. Verfahren zur Herstellung eines beschichteten Rohrs aus einem thermoplastischen Rohr und einem metallischen Rohr, dadurch gekennzeichnet, daß ein metallisches Rohr und ein darin angeordnetes thermoplastisches Rohr von größerer Länge als das metallische Rohr in eine zylindrische Induktionsspule koaxial eingeschoben werden, wobei das besagte thermoplastische Rohr an seinen Enden zwei Öffnungen aufweist, die dicht verschlossen werden, daß das besagte metallische Rohr durch die besagte Induktionsspule erhitzt wird und als Heizelement dient, und daß das besagte thermoplastische Rohr durch die Strahlungswärme dieses Heizelementes erhitzt wird, und gleichzeitig der Druck in dem thermoplastischen Rohr erhöht wird, wodurch das besagte thermoplastische Rohr aufgebläht wird und mit der inneren Oberfläche des besagten metallischen Rohrs verschmilzt.

2. Verfahren gemäß Anspruch 1, dadurch gekennzeichnet, daß die besagte Erhitzung in einer solchen Weise ausgeführt wird, daß in axialer Richtung die mittlere Zone der besagten Induktionsspule eine höhere Temperatur erreicht als die Endzonen der Induktionsspule.

3. Verfahren gemäß Anspruch 1 oder 2, dadurch gekennzeichnet, daß ein magnetisches Rohr in das besagte thermoplastische Rohr eingeschoben wird und als Heizelement dient, und daß das besagte thermoplastische Rohr durch die Strahlungswärme des besagten metallischen Rohrs und des besagten magnetischen Rohrs erhitzt wird, die beide durch die besagte Induktionsspule erhitzt werden, und gleichzeitig der Druck in dem besagten thermoplastischen Rohr erhöht wird.

4. Verfahren zur Herstellung eines beschichteten Rohrs aus einem thermoplastischen Rohr und einem metallischen Rohr, bei dem ein in ein metallisches Rohr eingeschobenes thermoplastisches Rohr, das an den Enden Öffnungen aufweist und eine größere Länge als das metallische Rohr hat, dicht verschlossen wird, dadurch gekennzeichnet, daß das besagte thermoplastische Rohr durch das induktionserhitzte besagte metallische Rohr indirekt erhitzt wird, und entweder nach oder während dieser besagten Erhitzung der Druck in dem besagten thermoplastischen Rohr erhöht wird.

5. Vorrichtung zur Anwendung des Verfahrens gemäß einem der Ansprüche 1 bis 4, aus Mitteln (5a, 6a) zum dichten Verschließen der Öffnungen an den Enden eines thermoplastischen Rohrs (3), das in ein metallisches Rohr (2) eingeschoben ist, Mitteln (6b) zur Druckerhöhung in dem besagten thermoplastischen Rohr (3), und Mitteln (1) zum indirekten Erhitzen des besagten metallischen Rohrs (2) durch Induktion.

## Revendications

1. Méthode de fabrication d'un tube revêtu constitué d'un tube thermoplastique et d'un tube métallique, caractérisé par l'insertion coaxiale dans une bobine cylindrique d'induction d'un tube métallique et d'un tube thermoplastique de plus grande longueur que le tube métallique inséré dans ledit tube métallique, ledit tube thermoplastique ayant deux orifices à ses extrémités opposées qui sont fermées hermétiquement, le chauffage dudit tube métallique par la bobine d'induction servant d'élément chauffant et le chauffage du tube thermoplastique par la chaleur radiante provenant dudit élément chauffant, tout en appliquant simultanément une pression à l'intérieur du tube thermoplastique de façon à provoquer le gonflement du tube thermoplastique et son scellement à la surface intérieure dudit tube métallique.

2. Méthode selon la revendication 1, caractérisée en ce que le chauffage est effectué de façon à ce que la partie centrale de la bobine à induction présente, dans la direction axiale de celle-ci une température plus élevée que dans les parties terminales opposées de celle-ci.

3. Méthode selon les revendications 1 ou 2, caractérisée en ce qu'un tube magnétique est inséré dans le tube thermoplastique et sert d'élément chauffant, et dans laquelle le tube thermoplastique est chauffé par la chaleur radiante provenant du tube métallique et dudit tube magnétique chauffés tous deux par la bobine d'induction tandis que, simultanément, une pression est appliquée à l'intérieur du tube thermoplastique.

4. Méthode de fabrication d'un tube revêtu constitué d'un tube thermoplastique et d'un tube métallique, comprenant la fermeture étanche d'un tube thermoplastique inséré dans un tube métallique et présentant des orifices à ses extrémités opposées et ayant une longueur plus grande que celle du tube métallique, caractérisée en ce que le tube thermoplastique est chauffé indirectement par le tube métallique qui est chauffé par induction et en ce que, soit après ce chauffage soit pendant celui-ci, une pression est appliquée à l'intérieur du tube thermoplastique.

5. Appareil pour mettre en œuvre la méthode selon l'une des revendications 1 à 4, comprenant un moyen (5a, 6a) pour fermer hermétiquement les orifices aux extrémités opposées du tube thermoplastique (3) inséré dans un tube métallique (2), un moyen de pression (6b) pour appliquer la pression à l'intérieur du tube thermoplastique (3) et un moyen de chauffage par induction (1) pour chauffer indirectement ledit tube métallique (2).

# Fig. 1

# Fig. 2

# Fig. 3

# Fig. 4

# Fig. 5

# Fig. 6

Fig. 7

(A)

(B)

(C)
2
3

(D)
2
3

(E)
2
3

Fig. 8

(A)

(B)

(C)
2
3

(D)
2
3

(E)
2
3

**Fig. 9**

**Fig. 10**

**Fig. 11**

**Fig. 12**